Europäisches Patentamt

European Patent Office

Office européen des brevets

(11) Numéro de publication: **0 072 278**
**A1**

## (12) DEMANDE DE BREVET EUROPEEN

(21) Numéro de dépôt: **82401348.6**

(22) Date de dépôt: **20.07.82**

(51) Int. Cl.³: **F 16 C 11/06**, B 62 D 7/16

(30) Priorité: **27.07.81 FR 8114536**

(43) Date de publication de la demande: **16.02.83**
**Bulletin 83/7**

(84) Etats contractants désignés: **DE FR GB**

(71) Demandeur: **REGIE NATIONALE DES USINES RENAULT, Boite postale 103 8-10 avenue Emile Zola, F-92109 Boulogne-Billancourt (FR)**

(72) Inventeur: **Chevret, Remy, 17, rue Curial, F-75019 Paris (FR)**

(74) Mandataire: **Ernst-Schonberg, Michel et al, RNUR - S. 0804 B.P. 103, F-92109 Boulogne-Billancourt (FR)**

(54) **Mécanisme à rotule double.**

(57) La présente invention a pour objet un mécanisme de liaison à rotule double comportant deux calottes sphériques reliées à des tiges de sortie et articulées l'une sur l'autre par l'intermédiaire d'une surface sphérique intercalaire et d'une surface sphérique extérieure ménagée sur chaque calotte et en appui sur des surfaces sphériques intérieures d'un boîtier.

Le boîtier 9 est constitué d'un corps monobloc 7 solidaire des biellettes 1 ou 2 ou de la tige de commande 3 et comporte un logement 10 ouvert à ses deux extrémités pour le passage des tiges de sortie 1 et 2 et la portée sphérique 11 de l'une des calottes 5. Le boîtier 9 est fermé autour de la tige de sortie 1 de l'autre calotte 4 par une bague 14.

La rotule double est appliquée en particulier pour relier deux biellettes d'actionnement à une tige de commande, notamment pour une direction de véhicule automobile.

Mécanisme à rotule double.

La présente invention se rapporte à un joint sphérique réalisé sous la forme d'une rotule double du type servant en particulier à relier la crémaillère d'un boîtier de direction de véhicule automobile aux leviers des porte-fusées droit et gauche du train directeur du véhicule automobile.

Il est connu de relier les deux barres de timonerie de direction d'un véhicule automobile sur une rotule unique solidaire par exemple d'une tige de crémaillère. Cette solution constitue un perfectionnement aux solutions à deux biellettes de direction articulées séparément chacune sur un axe d'un support emmanché sur un axe de direction solidaire d'une crémaillère ou d'une tige d'assistance. En effet, la rotule double de type connu comporte un axe de pivot terminé par une sphère entourée de deux calottes sphériques solidaires des barres de timonerie. Les calottes sphériques sont serrées sur la sphère chacune par une bague constituant deux demi-noix qui sont emprisonnées dans deux demi-carters assemblés par des boulons ou des rivets.

Ces rotules doubles donnent généralement satisfaction pour la réalisation des timoneries de direction mais présentant des difficultés d'étanchéité et des limitations de débattement angulaire tout en exigeant l'assemblage de nombreuses pièces de formes complexes et précises qui conduisent à un prix de revient relativement élevé.

L'un des buts de la présente est précisément de réaliser une rotule double possédant un nombre de pièces plus réduit et dont les méthodes de fabrication et de montage sont simplifiées tout en permettant un débattement angulaire plus important.

A cet effet, le mécanisme de liaison à rotule double en particulier pour relier deux biellettes d'actionnement à une tige de commande, notamment pour une direction de véhicule automobile, du type comportant deux calottes sphériques reliées à des tiges de sortie et articulées d'une part élastiquement l'une sur l'autre par l'intermédiaire d'au moins une surface sphérique d'une pièce intercalaire en appui sur la surface sphérique intérieure conjuguée de l'une des calottes sphériques et d'autre part, chacune par l'intermédiaire d'une surface sphérique extérieure ménagée sur chaque calotte autour des tiges de sortie, sur des portées sphériques solidaires d'un boîtier, est caractérisé en ce que le boîtier est constitué d'un corps monobloc rigide qui est solidaire soit de l'une des biellettes soit de la tige de commande du mécanisme, qui comporte un logement ouvert pour le passage des tiges de sortie et la portée sphérique de l'une des calottes, qui contient la rotule double et est fermé autour de la tige de sortie de l'autre calotte par une pièce annulaire qui constitue la portée sphérique de cette autre calotte et est fixée rigidement sur le corps pour venir emprisonner la rotule double dans le logement. La pièce annulaire est fixée rigidement et avec précision sur le corps par appui en butée dans un alésage ouvert de celui-ci suivi d'un sertissage par refoulement de la matière du corps pour fermer l'ouverture de l'alésage.

Le boîtier fixé à l'une des tiges du mécanisme offre ainsi une grande latitude de débattement aux biellettes par l'intermédiaire des calottes sphériques emprisonnées en position par la bague constituant la pièce annulaire.

Selon une caractéristique importante de l'invention, les deux calottes sphériques sont articulées élastiquement l'une sur l'autre au moyen d'une rondelle en un matériau élastomère interposée entre, d'une part, l'embase plane de la tête sphérique d'un pion qui constitue la pièce intercalaire et dont la tige est engagée dans un alésage ménagé dans l'une des calottes sphériques et, d'autre part, une face plane ménagée en bout de cette calotte, la tête sphérique du pion comportant la surface sphérique en appui sur la surface sphérique intérieure de l'autre calotte, ou bien en variante, les deux calottes sphériques sont articulées élastiquement l'une sur l'autre par l'intermédiaire d'une bille interposée entre leurs surfaces sphériques intérieures et du serrage de la pièce annulaire bloquée en position par le sertissage du corps.

La pièce annulaire est de préférence réalisée en un matériau relativement élastique tel qu'une matière plastique pour augmenter l'élasticité du serrage des calottes sphériques.

Le rattrapage du jeu s'effectue ainsi selon l'axe des rotules. Le mécanisme ne comporte que trois surfaces frottantes bien définies géométriquement et sur le plan des matériaux en contact. De plus, par rapport à la solution à pivot central terminé par une rotule et constituant l'état de la technique, il suffit d'assurer l'étanchéité des tiges de sortie des biellettes d'actionnement par des soufflets sans avoir à s'inquiéter de l'étanchéité du pivot central remplacé par le corps monobloc constituant le boîtier du mécanisme.

Un bloc en un matériau élastomère peut être interposé entre la bille, par l'intermédiaire d'une surface sphérique ménagée à la surface de l'élastomère, et une surface d'appui ménagée sur l'une des calottes sphériques afin d'augmenter l'élasticité du serrage des calottes sphériques.

Le bloc en matériau élastomère présente la forme générale d'un disque percé en son centre d'un trou qui vient se loger sur un têton de centrage ménagé sur la surface d'appui de la calotte sphérique. Un disque de friction peut être interposé entre le bloc d'élastomère et la bille.

Selon un autre mode de réalisation de l'invention, la pièce annulaire qui constitue la portée sphérique de l'autre calotte présente un rebord extérieur servant d'appui annulaire à un soufflet d'étanchéité relié à la tige de sortie située du côté de la pièce annulaire.

On doit noter que selon le mode de réalisation le plus avantageux, la biellette ou la tige de commande solidaire du corps est fixée à ce corps par sertissage dans un alésage de fixation ménagé dans ce corps.

D'autres buts, avantages et caractéristiques apparaîtront à la lecture de la description qui va suivre d'un exemple non limitatif d'un mode de réalisation de l'invention, faite en regard du dessin annexé où :

- la figure 1 représente en coupe une rotule double selon l'invention reliant à une tige de commande, traversant un corps de rotule, deux biellettes articulées sur une bille de grand diamètre ;

- la figure 2 représente en coupe avec arrachement un autre type de rotule selon l'invention reliant à une tige de commande en bout, deux biellettes articulées sur une bille de petit diamètre ;

- la figure 3 est une vue en coupe d'une variante de la rotule double selon la figure 1 et dans laquelle la bille de grand diamètre est remplacée par la tête sphérique d'un pion ;

- la figure 4 est une vue en coupe avec arrachement d'une variante de la rotule selon la figure 2 utilisant une bille de grand diamètre ;

- la figure 5 est une vue en coupe avec arrachement d'une autre variante de la rotule selon la figure 2.

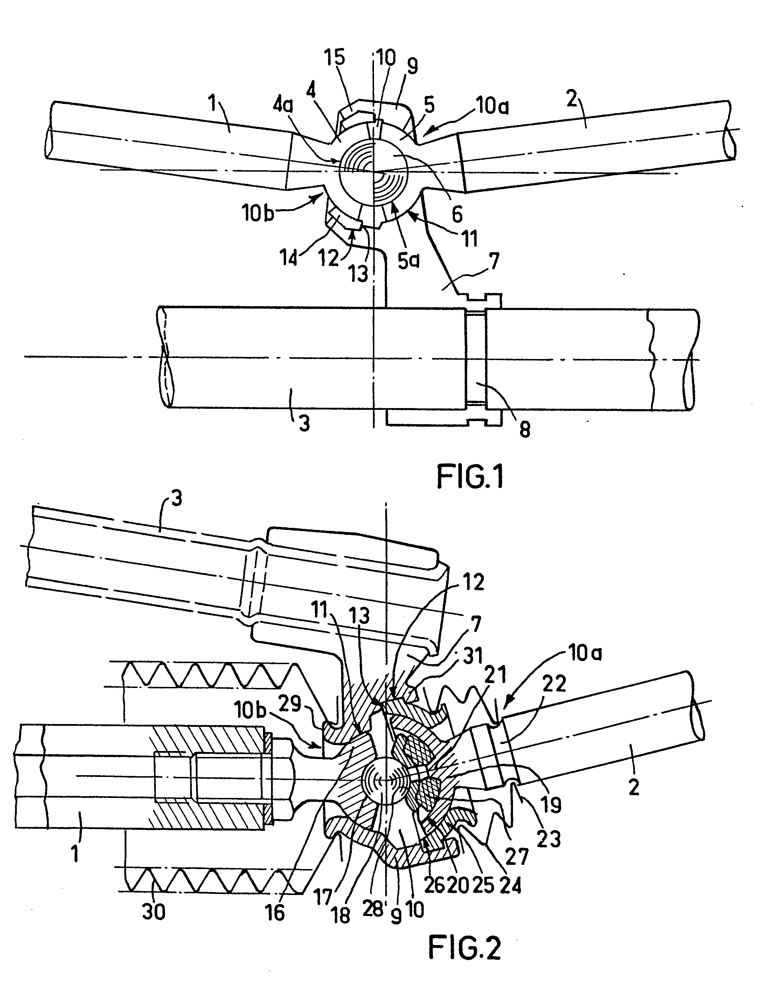

La rotule double représentée sur la figure 1 est destinée en particulier à relier deux biellettes d'actionnement (tiges 1 et 2) des roues directrices d'un véhicule automobile à une tige de commande 3 de la direction de ce véhicule telle qu'une tige de crémaillère. Les biellettes 1 et 2 comportent chacune une calotte sphérique (4 et 5) articulée par sa surface sphérique intérieure, respectivement (4a et 5a) sur une bille centrale 6 de relativement grand diamètre. La tige de commande 3 et la rotule double sont reliées par l'intermédiaire d'un corps 7 traversé par la tige 3 et serti sur une rainure annulaire 8 de cette tige.

Selon l'invention, le corps 7 constitue un boîtier monobloc 9 dans lequel est ménagé un logement 10 ouvert à ses deux extrémités 10a et 10b et qui comporte la portée sphérique 11 de la calotte 5 ainsi qu'un alésage 12 terminé par une surface de butée 13 pour une pièce annulaire en forme de bague 14 qui constitue la portée sphérique de la calotte 4 de la tige 1 et est réalisée de préférence en un matériau de bonne qualité frottante résistant aux efforts d'extraction communiqués par la calotte 4.

Le montage de la rotule double s'effectue de la façon suivante :
La tige 2 est enfilée dans le logement 10 et ressort par l'extrémité
10a pour venir en butée par la surface sphérique extérieure de la
calotte 5 sur la portée 11. La bille 6 est ensuite posée dans la surface sphérique intérieure 5a de la calotte 5 et maintenue dans cette
surface sphérique formant poche, généralement par collage à la
graisse. La calotte 4 équipée de la bague 14 est ensuite introduite
par l'extrémité ouverte 10b du logement 10, dont le diamètre d'ouverture est supérieur à l'encombrement de la calotte 4, et vient s'appliquer par sa surface sphérique intérieure 4a en butée sur la bille
6 alors que le logement 10 a été préalablement rempli d'un produit
lubrifiant tel que de la graisse. Le boîtier 9 est enfin fermé par
sertissage en écrasant radialement vers l'intérieur un rebord mince
15 formé par l'alésage 12 au débouché du boîtier 9 du côté de la tige
1. Ce sertissage de fermeture, qui vient emprisonner les calottes 4 et
5 dans le logement 10, cambre également la bague 14 en direction du
centre de la bille 6 et la refoule au contact de la surface de butée
13 pour rattraper tous les jeux existant entre les portées sphériques
du boîtier 9 et les calottes sphériques 4 et 5. Les jeux qui pourraient apparaître en service à la suite de l'usure de ces portées
sont rattrapés, aussi longtemps que ces usures restent limitées, par
l'élasticité propre de la bague 14.

La rotule représentée sur la figure 2 comporte des éléments identiques fonctionnellement avec ceux de la rotule représentée sur la
figure 1. Ces éléments identiques sont dotés des mêmes références. La
tige de commande 3 représentée ici est réalisée en tube creux fixé en
bout par repoussage de butées d'extrémité dans un alésage du corps
monobloc 7. La tige 1 des biellettes est vissée sur une calotte d'extrémité 16 plus massive que la calotte 4 et qui coopère par un creux
sphérique central 17 avec une bille 18 de plus petit diamètre que la
bille 6. La tige 2 vient monobloc avec une calotte sphérique 19 de
plus faible épaisseur que la calotte 16 et que les calottes 4 et 5 de
la figure 1 et comportant au centre de sa surface sphérique intérieure
20 un téton de centrage 21. La tige 2 présente une rainure annulaire
22 d'appui pour le rebord 23 d'un soufflet d'étanchéité 24 dont l'autre extrémité vient se loger sur un rebord ménagé sur une bague de fermeture 25 qui présente une surface de portée sphérique intérieure 26 coopérant avec la portée sphérique extérieure de la calotte 19. Le boîtier 9 comporte, comme celui de la figure 1, un logement intérieur 10 ouvert à ses deux extrémités 10a et 10b avec une portée sphérique 11 coopérant avec la calotte 16 et un alésage 12 terminé par une surface de butée 13 pour recevoir la bague de fermeture 25.

Selon le mode de réalisation particulier de la figure 2 un bloc de matériau élastomère 27 en forme de rondelle percée d'un trou central, est interposé entre la surface sphérique intérieure 20 de la calotte 16 et la bille 18 de petit diamètre, cette rondelle d'élastomère 27 étant armée à sa surface du côté de la bille 18 d'un disque de friction recouvrant 28 en un matériau résistant à l'usure et de bonne qualité frottante recouvrant une tôle métallique. Autour de l'ouverture 10b, le boîtier 9 est muni d'un rebord 29 qui reçoit l'extrémité d'un soufflet d'étanchéité 30 qui recouvre la tige 1 et assure l'étanchéité de l'ouverture 10b à l'égard des pollutions extérieures.

Le montage de la rotule double représentée sur la figure 2 s'effectue en introduisant la calotte d'extrémité 16, déconnectée de la tige 1, à l'intérieur du logement 10 et à travers l'ouverture 10b puis en plaçant la bille 18 dans le creux 17 de la calotte 16 et en remplissant le logement 10 de lubrifiant tel que de la graisse. La calotte 19 est ensuite, d'une part, équipée de sa rondelle d'élastomère 27 centrée et fichée sur le téton 21 et armée du disque de friction 28 et, d'autre part, recouverte de la bague de fermeture 25 pour être introduite par poussée sur cette bague 25 dans l'alésage 12 jusqu'au contact de la bille 18 par le disque de friction 28 à l'intérieur du logement 10. Pour fermer l'ouverture 10b et emprisonner la rotule dans son logement 10, il reste à bloquer par un sertissage rabattant 31 la bague de fermeture 25 dans l'alésage 12 au contact de la butée 13. Les dimensions respectives de la bague 25 et de la butée 13 sont telles que la rondelle d'élastomère 27 est comprimée au sertissage de fermeture du logement 10 et peut rattraper les jeux qui apparaîtraient en service dans la rotule double.

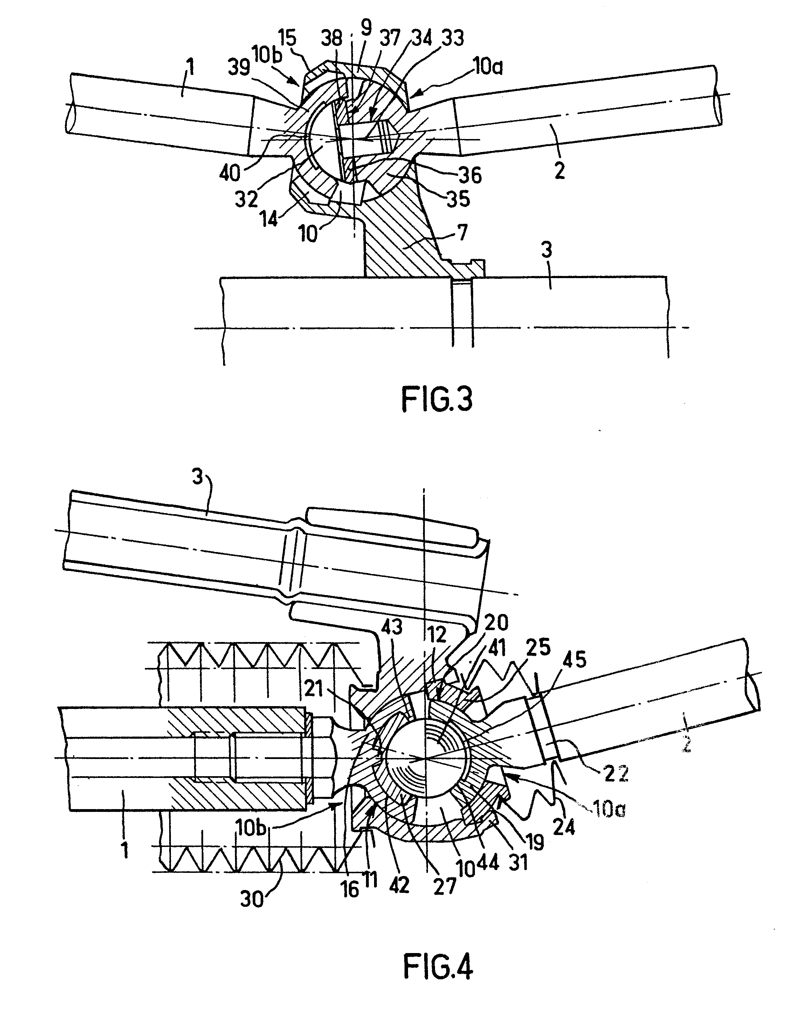

La rotule double représentée sur la figure 3 présente de nombreux éléments fonctionnels identiques à ceux de la figure 1 et dotés des mêmes numéros de référence.

La bille de grand diamètre est remplacée par un pion à tête sphérique 32 et dont la tige 33 est engagée dans un alésage 34 ménagé dans la calotte sphérique 35 de la tige 2.

Selon l'invention, une rondelle en un matériau élastomère 36 est interposée entre une embase plane 37 ménagée à l'extrémité frontale de la calotte 35 et l'embase plane 38 de la tête sphérique 32 du pion. La calotte 39 de la tige 1 présente un creux central 40 formant réserve de graisse emprisonnée entre sa portée sphérique intérieure et la surface extérieure de la tête sphérique 32.

Le montage de la rotule double de la figure 3 s'effectue en introduisant la tige 2 dont la calotte 35 est équipée du pion 32-33 et de sa rondelle élastomère 36, dans l'ouverture 10a et en munissant le logement 10 d'une réserve de graisse avant d'introduire la calotte 39 dans l'ouverture 10b de l'alésage 12. La fermeture du logement 10 s'effectue comme pour la figure 1 par sertissage du rebord 15, formé autour de l'alésage 12, sur la bague 14.

La rotule double de la figure 4 diffère de celle représentée sur la figure 2 par l'utilisation d'une bille centrale 41 de relativement grand diamètre, avec report de la rondelle d'élastomère 27 dans un logement 42 ménagé dans la calotte 16 de la tige 1 et doté de rebords 43 de retenue latérale.

La portée sphérique intérieure 44 ménagée sur la calotte 19 est dotée d'une réserve centrale de graisse 45. Comme pour la rotule double de la figure 2, le montage s'effectue en introduisant à travers l'ouverture 10b la calotte d'extrémité 16 déconnectée de la tige 1 et équipée de sa rondelle d'élastomère 27. Le logement 10 est fermé par un sertissage rabattant 31 après introduction de la bille 41 et de la calotte 19 entourée de la bague 25 en butée dans l'alésage 12.

Selon les exemples de réalisations précités, les tiges de sortie sont respectivement rendues solidaires des calottes sphériques si bien que la tige de commande est soumise à un couple de basculement par rapport au centre de la rotule, ce qui n'est pas sans inconvénients à la tenue mécanique des paliers support de la tige de commande de la crémaillère et engendre des contraintes dans la zone de contact de la crémaillère avec le pignon.

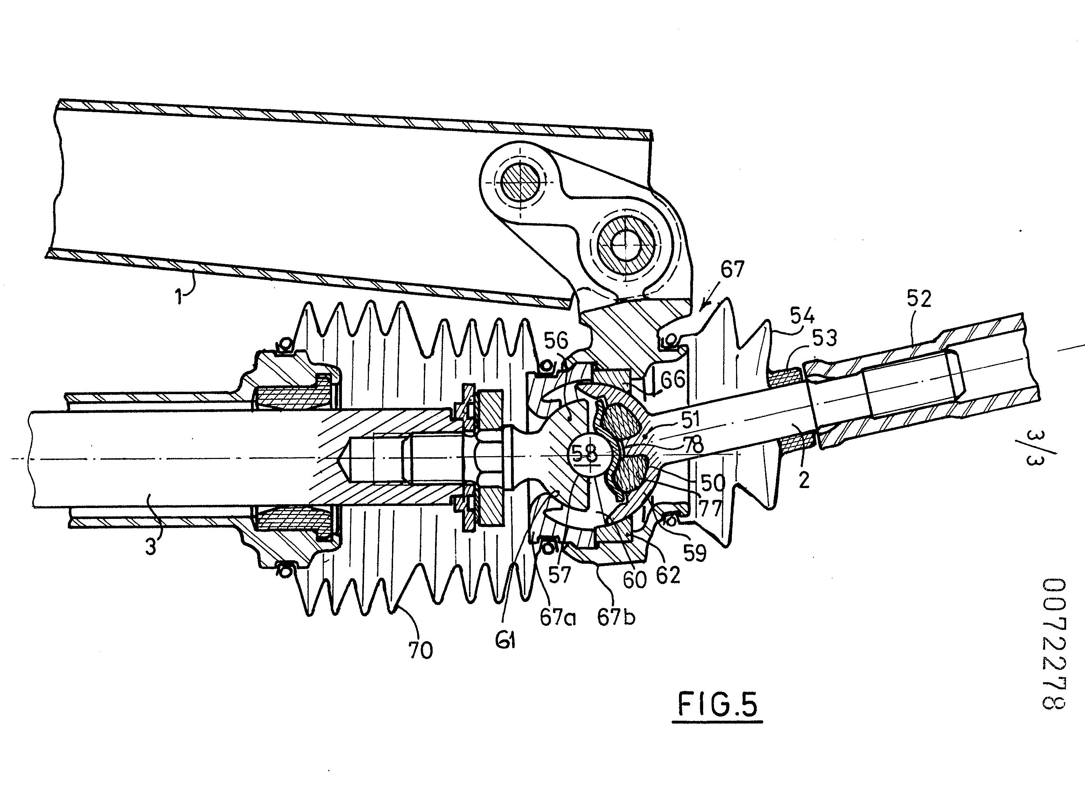

L'exemple de réalisation illustré à la figure 5 concerne un mécanisme de liaison à rotule remédiant à cet inconvénient.

A cet effet, l'une des calottes sphériques prolonge axialement l'extrémité de la crémaillère.

Le mécanisme de liaison à rotule représenté sur la figure 5 comporte des éléments identiques fonctionnellement avec ceux de la rotule représentée sur la figure 2. La tige de commande 3 représentée ici est réalisée par l'extrémité d'une crémaillère de direction. La tige 3 de la crémaillère est vissée après interposition d'une rondelle frein sur la calotte d'extrémité 56 plus massive et qui coopère par un creux sphérique central 57 avec une bille 58 de petit diamètre. La tige 2 vient monobloc avec une calotte sphérique 59 qui comporte au centre de sa surface sphérique intérieure 50 un têton de centrage 51 qui limite le jeu de compression d'un bloc élastomère 77. La tige 2 est vissée dans un tube 52 d'appui pour le rebord 53 d'un soufflet d'étanchéité 54 dont l'autre extrémité vient se loger sur un rebord ménagé sur le corps 67 qui présente une surface de portée sphérique intérieure rapportée 66 coopérant avec la portée sphérique extérieure de la calotte 59. Le corps 67, en deux parties 67a, 67b assemblées par sertissage, comporte, comme celui de la figure 1, un logement intérieur 60, ouvert aux extrémités des parties 67a et 67b, avec une portée sphérique 61 coopérant avec la calotte 56 et un alésage 62 terminé par une surface de butée pour recevoir la portée sphérique rapportée 66.

49398 11

Le bloc de matériau élastomère 77, en forme de rondelle percée d'un trou central, est interposé entre la surface sphérique intérieure 50 de la calotte 59 et la bille 58 de petit diamètre, cette rondelle d'élastomère 77 étant armée à sa surface du côté de la bille 58 d'un disque de friction recouvrant 78 en un matériau résistant à l'usure et de bonne qualité frottante tel qu'une tôle métallique. Autour de l'ouverture de la partie 67a, le boîtier 67 est muni d'un rebord qui reçoit l'extrémité d'un autre soufflet d'étanchéité 70 qui recouvre la tige 3 de la crémaillère et assure l'étanchéité de l'ouverture de la partie 67a à l'égard des pollutions extérieures.

La biellette 1 est rivée à l'élément extérieur 67b du corps 67 dans le but de réaliser une liaison rigide avec le dit corps et dans le but de satisfaire aux conditions d'articulation de la biellette 1 et du corps 67 simultanément par rapport à la calotte sphérique 56 montée à l'extrémité de la crémaillère, et par rapport à la calotte 59.

On doit noter qu'en général le coefficient de frottement entre le matériau élastomère interposé dans la rotule double et les surfaces de contact en acier qui lui font face est supérieur au coefficient de frottement entre les surfaces métalliques sphériques qui se font face respectivement entre les calottes sphériques et leur portée dans le logement 10 ou bien entre ces calottes sphériques et la bille ou la tête sphérique du pion, ce qui garantit que le matériau élastomère ne sera pas soumis en service à une usure de friction. Les surfaces métalliques soumises à la friction sont réalisées avec des états de surface et physicochimiques (par exemple : cémenté et trempé) garantissant un coefficient de frottement bas et une grande résistance à l'abrasion.

Bien entendu, la présente invention n'est pas limitée aux mode de réalisation décrits et représentés ; elle est susceptible de nombreuses variantes accessibles à l'homme de l'art, suivant les applications envisagées et sans que l'on ne s'écarte de l'esprit de l'invention.

0072278

REVENDICATIONS

1. Mécanisme de liaison à rotule double en particulier pour relier deux biellettes (1, 2) d'actionnement à une tige de commande (3), notamment pour une direction de véhicule automobile, du type comportant deux calottes sphériques (4, 5 - 16, 19 - 39, 35 - 56, 59) reliées à des tiges de sortie (1, 2) et articulées d'une part l'une sur l'autre par l'intermédiaire d'au moins une surface sphérique d'une pièce intercalaire (6, 18, 32, 41, 58) en appui sur la surface sphérique intérieure conjuguée de l'une des calottes sphériques et d'autre part, chacune, par l'intermédiaire d'une surface sphérique ménagée sur chaque calotte autour des tiges de sortie, sur des portées sphériques solidaires d'un boîtier (9) constitué d'un corps monobloc rigide (7, 67) qui est solidaire soit de l'une des biellettes (1, 2) soit de la tige de commande (3) du mécanisme, qui comporte un logement (10, 60), ouvert pour le passage des biellettes (1, 2) ou de la tige de commande (3) et la portée sphérique (11, 66) de l'une des calottes (5, 16, 59), qui contient la rotule double et est fermé autour de la tige de sortie (1) ou de commande (3) de l'autre calotte (4, 19, 56) par une pièce annulaire (14, 25) qui constitue la portée sphérique de cette autre calotte et est fixée rigidement sur le corps (7, 67) pour venir emprisonner la rotule double dans le logement (10, 60), caractérisé en ce que les deux calottes sphériques (39, 35) sont articulées élastiquement l'une sur l'autre au moyen d'une rondelle (36) en un matériau élastomère interposé entre d'une part, l'embase plane (38) de la tête sphérique (32) d'un pion qui constitue la pièce intercalaire et dont la tige (33) est engagée dans un alésage (34) ménagé dans l'une (35) des calottes sphériques et, d'autre part, une face plane (37) ménagée en bout de cette calotte (35), la tête sphérique (32) du pion comportant la surface sphérique en appui sur la surface sphérique intérieure de l'autre calotte.

2. Mécanisme selon la revendication 1, caractérisé en ce qu'une pièce annulaire (14, 25) bloquée en position par le sertissage (15, 31) du corps (7, 9) est en forme de bague en matériau à faible coefficient de frottement.

3. Mécanisme selon la revendication 2, caractérisé en ce qu'un bloc (27) en un matériau élastomère est interposé entre la bille (18, 41) et une surface d'appui (20, 42) ménagée sur l'une des calottes sphériques (16 ou 19) afin d'augmenter l'élasticité du serrage des calottes sphériques.

4. Mécansime selon la revendication 3, caractérisé en ce que le bloc en matériau élastomère présente la forme générale d'un disque (27) percé en son centre d'un trou qui vient se loger sur un têton de centrage (21) ménagé sur la surface d'appui (20, 42) de la calotte sphérique.

5. Mécanisme selon l'une des revendications 1 à 4, caractérisé en ce que la pièce annulaire (25) qui constitue la portée sphérique de l'autre calotte (19) présente un rebord extérieur servant d'appui annulaire à un soufflet d'étanchéité (24) relié à la tige de sortie (2) située du côté de cette pièce annulaire (25).

6. Mécanisme selon l'une des revendications 1 à 5, caractérisé en ce que la biellette ou la tige de commande (3) solidaire du corps (7) est fixé à ce corps (7) par sertissage (8) dans un alésage de fixation ménagé dans ce corps (7).

7. Mécanisme de liaison à rotule double en particulier pour relier deux biellettes d'actionnement (1, 2), à une tige de commande (3), notamment pour une direction de véhicule automobile, du type comportant deux calottes sphériques (56, 59) reliées à des tiges de sortie et articulées d'une part l'une sur l'autre par l'intermédiaire d'au moins une surface sphérique d'une pièce intercalaire (58) en appui sur la surface sphérique intérieure conjuguée (57) de l'une des calottes sphériques (56) et d'autre part, chacune, par l'intermédiaire d'une surface sphérique extérieure ménagée sur chaque calotte autour des tiges de sortie, sur des portées sphériques (61, 66) solidaires d'un boîtier (67) constitué d'un corps rigide qui est solidaire de l'une des biellettes (1), qui comporte un logement (60), ouvert pour le passage d'une biellette (2), qui contient la rotule double et est fermé autour de la tige de sortie d'une calotte (59) par une pièce annulaire qui constitue la portée sphérique (66) de cette calotte et est fixée rigidement sur le corps (67) pour venir emprisonner la rotule double dans le logement, caractérisé par le fait que l'une des calottes sphériques (56) se prolonge axialement par l'extrémité de la crémaillère (3).

8. Mécanisme de liaison à rotule double selon la revendication 7, caractérisé par le fait que l'une des biellettes (1) est rigidement solidaire au corps 67 portant les surfaces de portées sphériques (61, 66) des calottes sphériques (56, 59).

FIG.1

FIG.2

FIG.3

FIG.4

0072278

FIG.5

0072278

Office européen
des brevets

**RAPPORT DE RECHERCHE EUROPEENNE**

Numéro de la demande

EP  82 40 1348

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| | --- | | F 16 C   11/06 |
| Y | FR-A-1 001 078  (THOMPSON) <br> * en entier * | 1,2 | B 62 D    7/16 |
| | --- | | |
| Y | FR-A-1 197 342  (VILLA) <br> * page 2, figure 3 * | 1 | |
| | --- | | |
| A | US-A-3 343 856  (CISLO) <br> * colonne 1, lignes 67-69; figure 1 * | 3 | |
| | --- | | |
| A | US-A-2 596 885  (BOOTH) <br> * en entier * | 6 | |
| | --- | | |
| A | FR-A-1 355 232  (THOMPSON) | | |

### DOMAINES TECHNIQUES RECHERCHES (Int. Cl. 3)

| Catégorie | Citation | Rev. | |
|---|---|---|---|
| | --- | | F 16 C |
| A | US-A-2 614 862  (ALLDREDGE) | | B 62 D |
| | --- | | |
| A | US-A-3 374 016  (MELTON) | | |
| | --- | | |
| A | FR-A-1 156 758  (THOMPSON) | | |
| | --- | | |
| A | FR-A-1 043 832  (EHRENREICH) | | |
| | ---              -/- | | |

Le présent rapport de recherche a été établi pour toutes les revendications

| Lieu de la recherche | Date d'achèvement de la recherche | Examinateur |
|---|---|---|
| LA HAYE | 19-10-1982 | ORTHLIEB CH.E. |

Office européen
des brevets

**RAPPORT DE RECHERCHE EUROPEENNE**

Numéro de la demande

EP 82 40 1348

| | **DOCUMENTS CONSIDERES COMME PERTINENTS** | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | FR-A-1 102 243 (MOSKOVITZ) | | |
| A | FR-A-1 572 872 (EHRENREICH) | | |
| A | FR-A-1 379 871 (WEHNER) | | |
| A | FR-A-1 458 003 (LEMFÖRDER) | | |
| A | FR-A-2 042 262 (SCHMID) | | |
| | - - - - - | | DOMAINES TECHNIQUES RECHERCHES (Int. Cl. ³) |

Le présent rapport de recherche a été établi pour toutes les revendications

| Lieu de la recherche | Date d'achèvement de la recherche | Examinateur |
|---|---|---|
| LA HAYE | 19-10-1982 | ORTHLIEB CH.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

OEB Form 1503. 03 82